# EUROPEAN PATENT APPLICATION

(11) **EP 2 623 993 A1**
(43) Date of publication of application: **07.08.2013**
(21) Application number: 12153499.4
(22) Date of filing: 01.02.2012
(51) Int. Cl.: G01P 5/02, G01P 13/00, G01W 1/02

(54) **Wind speed and direction measuring device**

(71) Applicant: IRDAM Institut de Recherches et Développements Aérologiques Marketing SA, 1401 Yverdon-les-Bains (CH)
(72) Inventor: Perraudin, Michel, 1188 Gimel (CH)
(74) Representative: Pautex Schneider, Nicole Véronique

(57) **Abstract**

A wind speed and direction measuring device (1) comprising a base member (2), an intermediate element (3) and a wind exposed top section (4), wherein the base member is fixedly joined to a lower end (3') of the intermediate member and the top section consists in a circularly symmetrical element fixedly joined to an upper end (3") of the intermediate member, sensors (5) adapted to measure a physical effect, created by the wind, applied to said wind exposed top section in order to generate signals depending on the speed and direction of the wind altering said physical effect, and an electronic calculation unit adapted to calculate the speed and the direction of the wind on the basis of said signals, wherein the physical effect on said wind exposed top section is the mechanical force of the wind tending to pivot said top section and said intermediate section with respect to said base member, and wherein said sensors are stress, position or movement sensors located on a force transmission line between said intermediate member and said base member.

## Description

The present invention is directed to a wind speed and direction measuring device and more particularly to a wind speed and direction measuring device comprising a physical effect detecting means.

Measuring devices for the speed and the direction of the wind are known devices and are widely used in different fields, for example in mobile or stationary facilities or vehicles such as on runways buildings or exposed topological sites in order to measure the wind parameters, and for each application, the cost should be adapted.

Document US 4,905,513 describes a relatively expensive device which comprises a heated ceramic cylinder, around which eight sensors are arranged, which is exposed to the wind. The outer surface of the ceramic cylinder is cooled by the wind, and the cooling effect is different on each of the temperature sensors, so that the direction and also the speed of the wind can be calculated on the basis of e.g. the most cooled temperature sensor and its two, left and right, neighbors. However, the accuracy of such a device is dependent on several external factors such as ambient pressure, temperature or humidity which may drastically alter the results thereby reducing the accuracy. It is therefore necessary to provide this type of device with a variety of sensors, which measure parameters, like temperature, humidity, pressure and the like, and which feed their signal into a compensator circuit, in order to eliminate the influence of these parameters.

Other known wind speed and direction measuring devices comprise one, two or more heated wires, which are arranged in perpendicular direction to each other, and which are differently cooled by the wind, whereby the difference of the cooling effect of the different wires gives an indication of the direction of the wind and the cooling effect gives an indication of the speed of the wind.

Further, other types of known wind speed and direction measuring devices comprise sensors which are arranged to directly detect the wind impinging on them in a direction perpendicular to the sensors, and which are therefore subjected to any type of damages and/or altered meteorological parameters. These devices therefore lack solidity and accuracy.

In view of the above, an object of the present invention is therefore to provide a wind speed and direction measuring device which solves the drawbacks mentioned above, and more particularly, which is capable of accurately detect the speed and the direction of the wind regardless of the pressure, temperature or humidity, and which is more solid and less expensive.

The above problems are solved by a wind speed and direction measuring device according to the present invention as claimed in claim 1.

A first aspect of the invention concerns a wind speed and direction measuring device comprising a base member, an intermediate element and a wind exposed top section, wherein the base member is fixedly joined to a lower end of the intermediate member and the top section consists in a circularly symmetrical element fixedly joined to an upper end of the intermediate member, sensors adapted to measure a physical effect, created by the wind, applied to said wind exposed top section in order to generate signals depending on the speed and direction of the wind altering said physical effect, and an electronic calculation unit adapted to calculate the speed and the direction of the wind on the basis of said signals, **characterized in that** the physical effect on said wind exposed top section is the mechanical force of the wind tending to pivot said top section and said intermediate section with respect to said base member, and in that said sensors are stress, position or movement sensors located on a force transmission line between said intermediate member and said base member. Thus, the sensors are not subjected to the meteorological variation as a mechanical force is detected.

According to a preferred embodiment of the invention, the wind speed and direction measuring device further comprises a cover protecting said wind speed and direction measuring device. Thus, the device is further protected and therefore more solid. Also, rain can therefore not alter the measurements.

According to a further preferred embodiment of the invention, the physical effect of said wind exposed top section is a drag force.

According to a further preferred embodiment of the invention, the sensors are located between said base member and a support. Thus, the sensors are protected from the outside thereby providing a more solid device.

According to a further preferred embodiment of the invention, the base member is the sensor. Thus, optical detection can be carried out.

According to a further preferred embodiment of the invention, said base member is a plate having a cross shape and comprises four sensors disposed symmetrically at the ends of the cross-shaped base member. Thus, the device has a simple structure which provides very accurate results.

According to a further preferred embodiment of the invention, said base member is a plate having a circle shape and the sensors are disposed along the periphery thereof. Thus, a very accurate direction measurement is carried out.

According to a further preferred embodiment of the invention, the sensors detect the movement of the intermediate element.

According to a further preferred embodiment of the invention, the wind exposed top member has a rough surface. Thus, the dependency to the number of Reynolds is lowered such that the device is more sensible and accuracy is enhanced.

According to a further preferred embodiment of the invention, the intermediate element is a cylindrical or prismatic rod. Thus, the rod has a minimal drag force and has therefore a minimal effect on the measurement.

According to a further preferred embodiment of the invention, the intermediate element is vertical. Thus, the exposed section is located as high as possible and its drag force is accurately measured as its lever effect is therefore maximal.

According to a further preferred embodiment of the invention, the base member is perpendicular to the intermediate element. Thus, the mechanical force is identically measured regardless of the direction of the wind.

According to a further preferred embodiment of the invention, the wind exposed top section has a cross section symmetrical with respect to the axis of the intermediate element. Thus, the top section can accurately measure the wind speed and direction regardless of the wind direction.

According to a further preferred embodiment of the invention, the base member, the intermediate element and the wind exposed top section are integrally formed. Thus, the mechanical force of the wind impinging on the top section is reliably transferred to the base member to be measured by the sensors.

According to a further preferred embodiment of the invention, the signals are electrical or optical signals. Therefore, any type of sensors can be used.

Further features and advantages of the present invention will be described in the following detailed description of several exemplary embodiments which should not be considered a limitation of the present invention, together with the attached drawings, wherein
- Figures 1A and 1B represent a side view and a top view of a wind speed and direction measuring device according to a first embodiment of the present invention,
- Figure 2 represents a side view of the wind speed and direction measuring device according to a second embodiment of the present invention,
- Figure 3 represents a top view of the wind speed and direction measuring device according to a further embodiment of the present invention,

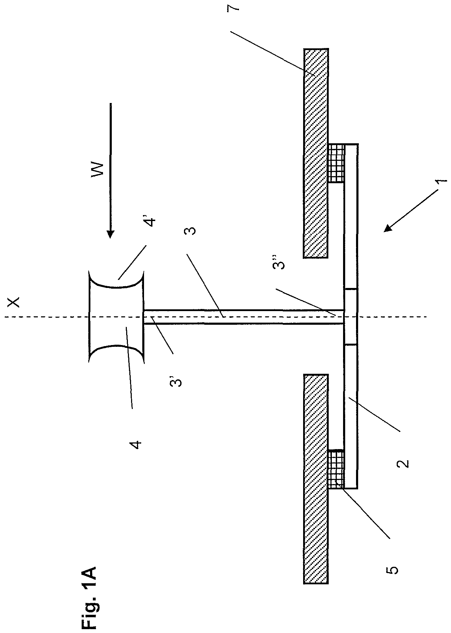

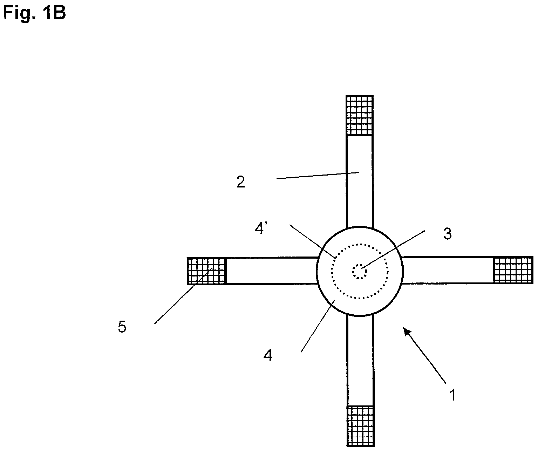

With reference to FIG. 1A and 1B, a measuring device 1 for the speed of the wind of a first embodiment is illustrated comprising a base member 2, a rod-like intermediate element 3 and a wind exposed top section 4, wherein the base member 2 consists of a plate fixedly joined to a lower end 3" of the intermediate member 3 and the top section 4 consists in a circularly symmetrical element fixedly joined to an upper end 3' of the intermediate member 3, sensors 5 adapted to measure a physical effect, created by the wind W, applied to said wind exposed top section 4 in order to generate preferably electrical signals depending on the speed and direction of the wind altering said physical effect, and an electronic calculation unit (not shown) adapted to calculate the speed and the direction of the wind on the basis on said signals. The physical effect of said wind exposed top section 4 measured by the sensors 5 is the mechanical force of the wind leading to pivot said top section 4 and said intermediate section 3 in the W direction with respect to said base member 2. The sensors 5 are stress or movement sensors located on a force transmission line between said intermediate member 3 and said base member 2.

Figure 1A further shows a substrate member 7 located above the base member 2 and thereby sandwiching the sensors 5 with the base member 2 such that the sensors 5 are protected. In the embodiment, as shown in figure 1B, the base member 2 has a cross shape and the sensors 5 are located at the ends of the cross. The device 1, in this embodiment, has therefore four sensors 5 symmetrically located around a central portion of the cross, where the intermediate member 3 is joined with the base member 2, at an interval of 90°.

When the wind W impinges on the device 1 the wind speed and direction is therefore applying a wind force to the top section 4 such that said top section 4 generates a drag force which is detected by said sensors 5 detecting a movement or a stress of the base member 2. The sensors are fixed to both the base member 2 as well as the substrate member 7 and are thus compressed or expanded by any small pivoting movement of the intermediary member.

In figures 1A and 1B, a top section 4 having a round shape when viewed from above and a groove 4' along its periphery has been represented. However, the invention is not limited to this shape for the top section 4 and any type of shape can be used provided that the wind force can be detected uniformly irrespective from its direction. This means that any type of shape can be used and that any type of grooves, blind holes or the like can be designed on its surface, provided that the top section 4 has a shape symmetrical around its vertical axis X, where the vertical axis X is also the longitudinal axis of the intermediate member 3.

Also, even if any type of material can be used for manufacturing the top section 4, it is preferable that a material having a rough surface be used such that the dependency to the Reynolds Number is reduced. On the other hand, an intermediate member 3 having a smooth surface may be preferable under certain circumstance, in order to reduce its effect which can sometimes be a source of error since its drag force would therefore be added to the one of the top section. For this same reason, as shown in the figures, it may be preferable that the intermediate element 3 is a cylindrical rod shape to minimize its resistance to the wind.

Furthermore, in order to have a uniform measurement irrespective of the wind direction, it is preferable, as shown in the figures, that the intermediate element 3 is vertical and perpendicular to the base member 2.

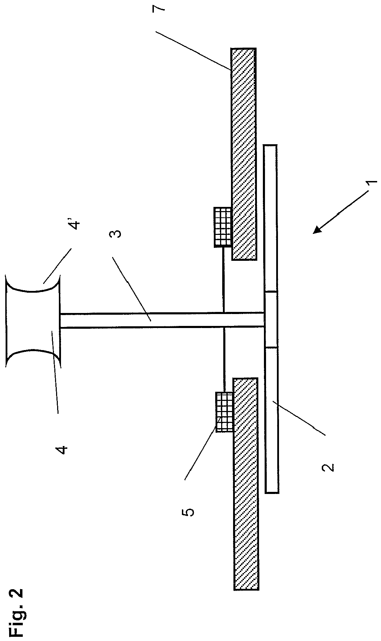

With reference to Figure 2 there is shown a second embodiment where the sensors 5 are measuring the speed and the direction of the wind by detecting the movement or the stress of the intermediate member 3 instead of the movement or the stress of the base member 2. Of course, a device comprising sensors 5 detecting the movement or the stress of both the base member 2 and the intermediate member 3 is also accurate.

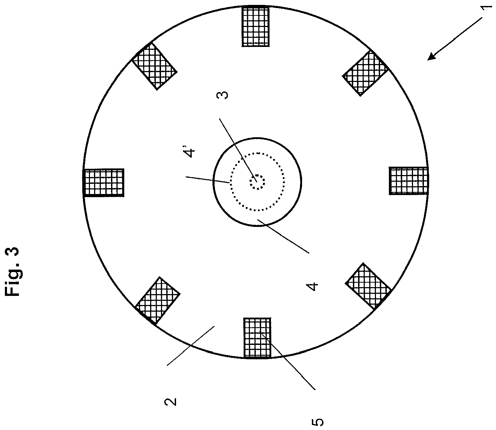

With reference to Figure 3 there is illustrated an alternative embodiment where the base member 2 has a different shape, i.e. a circle shape. Such a shape provides a larger area at its ends such that more sensors 5 can be used. Therefore, accuracy can be further enhanced. Figure 3 shows eight sensors 5 disposed at regular intervals along the periphery of the base member 2. However, a single continuous sensor extending along the whole periphery can also be used, for example, provided that it includes separate sections along its length, which produce individual signals.

It will be understood that various modifications and/or improvements obvious to the skilled man in the art can be carried out in the different embodiments of the invention described in the present specification without departing from its scope which is defined by the appended claims. More particularly, it is referred to the type of sensors which can be piezoelectric sensors, optical sensors, electric sensors or the like, to the type of material used which would enhance the measurement as well as the different shapes of the top section which can be any form as long as the wind mechanical force is well detected.

## Claims

1. A wind speed and direction measuring device (1) comprising a base member (2), an intermediate element (3) and a wind exposed top section (4), wherein the base member is fixedly joined to a lower end (3") of the intermediate member and the top section consists in a circularly symmetrical element fixedly joined to an upper end (3') of the intermediate member, sensors (5) adapted to measure a physical effect, created by the wind, applied to said wind exposed top section in order to generate signals depending on the speed and direction of the wind altering said physical effect, and an electronic calculation unit adapted to calculate the speed and the direction of the wind on the basis of said signals, **characterized in that** the physical effect on said wind exposed top section is the mechanical force of the wind tending to pivot said top section and said intermediate section with respect to said base member, and **in that** said sensors are stress, position or movement sensors located on a force transmission line between said intermediate member and said base member.

2. The wind speed and direction measuring device according to claim 1, further comprising a cover (6) protecting said wind speed and direction measuring device.

3. The wind speed and direction measuring device according to claim 1 or 2, wherein the physical effect of said wind exposed top section is the drag force.

4. The wind speed and direction measuring device according to any one of claims 1 to 3, wherein the sensors are located between said base member and a support.

5. The wind speed and direction measuring device according to any one of claims 1 to 3, the base member is the sensor.

6. The wind speed and direction measuring device according to any one of claims 1 to 4, wherein said base member is a plate having a cross shape and comprises four sensors disposed symmetrically at the ends of the cross-shaped base member.

7. The wind speed and direction measuring device according to any one of claims 1 to 4, wherein said base member is a plate having a circle shape and the sensors are disposed along the periphery thereof.

8. The wind speed and direction measuring device according to any one of claims 1 to 7, wherein the sensors detect the movement of the intermediate element.

9. The wind speed and direction measuring device according to any one of claims 1 to 8, wherein the wind exposed top member (4) has a rough surface.

10. The wind speed and direction measuring device according to any one of claims 1 to 9, wherein the intermediate element is a cylindrical or prismatic rod.

11. The wind speed and direction measuring device according to any one of claims 1 to 10, wherein the intermediate element is vertical.

12. The wind speed and direction measuring device according to any one of claims 1 to 11, wherein the base member is perpendicular to the intermediate element.

13. The wind speed and direction measuring device according to any one of claims 1 to 12, wherein the wind exposed top section has a cross section symmetrical with respect to the axis of the intermediate element.

14. The wind speed and direction measuring device according to any one of claims 1 to 13, wherein the base member, the intermediate element and the wind exposed top section are integrally formed.

15. The wind speed and direction measuring device according to any one of claims 1 to 14, wherein the signals are electrical or optical signals.
